# EUROPEAN PATENT APPLICATION

(11) **EP 4 636 632 A1**
(43) Date of publication of application: **22.10.2025**
(21) Application number: 25168226.6
(22) Date of filing: 03.04.2025
(51) Int. Cl.: G06F 21/62, H04L 67/1097

(54) **METHODS AND SYSTEMS FOR STORING DATA AT MULTIPLE DEVICES**

(30) Priority: 15.04.2024 US 202418635502
(71) Applicant: Avago Technologies International Sales Pte. Limited, Singapore 768923 (SG)
(72) Inventor: Fratti, Roger, Mohnton, PA, 19540 (US); Jana, Arun Prakash, 560075 Bangalore (IN); Bhat, Ashwini Shekhar, 560100 Bengaluru Karnataka (IN); Sahoo, Jimut Ranjan, 560102 Bangalore (IN); Dutta H K, Mahesh, 560004 Bangalore (IN); Buhari, Nizamudeen Mohamed, 560100 Bangalore (IN)
(74) Representative: Grünecker Patent- und Rechtsanwälte PartG mbB

(57) **Abstract**

The present application is directed to methods and systems for data storage. According to an embodiment, the present invention provides an apparatus that includes a first storage having a first portion, alongside a communication interface and a processor. This processor is connected to the first storage and the communication interface. The processor is configured to process a first data, which includes second data and third data. The processor is configured for obtaining the second and third data from the first data, storing the second data in the first portion of the first storage, and sending the third data to a secondary storage via the communication interface. Additionally, the processor is configured to remove the third data from the apparatus. The processor is further configured to obtain the first data by using the stored second data and retrieving the third data through the communication interface. There are other embodiments as well.

## Description

### BACKGROUND OF THE INVENTION

Data storage, with the advent of mobile devices and cloud storage, presents a range of challenges, particularly in terms of security and storage capacity. For example, mobile devices today include not just cellular phones, but electrical vehicles, tablets, computers, and many others. One of the concerns in mobile storage is security. With the increasing amount of sensitive personal and business information stored on mobile devices, these devices become attractive targets for cyber attacks. The risk is compounded by the varied and often insecure network environments that mobile devices connect to, making them susceptible to threats like man-in-the-middle attacks, malware, and unauthorized access. Additionally, the integration of cloud storage with mobile devices, while convenient, introduces further vulnerabilities. Cloud storage can be hacked, potentially exposing sensitive data stored off-device.

Another challenge is the limitation in storage size. Despite advancements in technology, the physical constraints of mobile devices restrict the amount of data they can store internally. This limitation becomes more pronounced with the growing size of applications and media files, as well as the increasing need for data storage for personal and professional use. Users often have to rely on external storage solutions like cloud services or external memory cards, which can introduce additional security concerns and may not always provide seamless access to data.

Therefore, improved methods and systems for data storage are desired.

### BRIEF DESCRIPTION OF THE DRAWINGS

Figure 1 is a simplified diagram illustrating a system for distributing data for storing at multiple devices according to embodiments of the present invention.
Figure 2 is a simplified diagram illustrating an exemplary process for storing password data at multiple devices according to embodiments of the present invention.
Figure 3 is a simplified diagram illustrating an exemplary implementation for accessing external devices as storage according to embodiments of the present invention.
Figure 4 is a simplified diagram illustrating a system for storing data at multiple devices according to embodiments of the present invention.
Figure 5 is a simplified diagram illustrating an exemplary device according to embodiments of the present invention.

### DETAILED DESCRIPTION OF THE INVENTION

The present application is directed to methods and systems for data storage. According to an embodiment, the present invention provides an apparatus that includes a first storage having a first portion, alongside a communication interface and a processor. This processor is connected to the first storage and the communication interface. The processor is configured to process a first data, which includes second data and third data. The processor is configured for obtaining the second and third data from the first data, storing the second data in the first portion of the first storage, and sending the third data to a secondary storage via the communication interface, and the separate storage could help improve data security. Additionally, the processor is configured to remove the third data from the apparatus. The processor is further configured to obtain the first data by using the stored second data and retrieving the third data through the communication interface. There are other embodiments as well.

The following description is presented to enable one of ordinary skill in the art to make and use the invention and to incorporate it in the context of particular applications. Various modifications, as well as a variety of uses in different applications will be readily apparent to those skilled in the art, and the general principles defined herein may be applied to a wide range of embodiments. Thus, the present invention is not intended to be limited to the embodiments presented, but is to be accorded the widest scope consistent with the principles and novel features disclosed herein.

In the following detailed description, numerous specific details are set forth in order to provide a more thorough understanding of the present invention. However, it will be apparent to one skilled in the art that the present invention may be practiced without necessarily being limited to these specific details. In other instances, well-known structures and devices are shown in block diagram form, rather than in detail, in order to avoid obscuring the present invention.

The reader's attention is directed to all papers and documents which are filed concurrently with this specification and which are open to public inspection with this specification, and the contents of all such papers and documents are incorporated herein by reference. All the features disclosed in this specification, (including any accompanying claims, abstract, and drawings) may be replaced by alternative features serving the same, equivalent or similar purpose, unless expressly stated otherwise. Thus, unless expressly stated otherwise, each feature disclosed is one example only of a generic series of equivalent or similar features.

Furthermore, any element in a claim that does not explicitly state "means for" performing a specified function, or "step for" performing a specific function, is not to be interpreted as a "means" or "step" clause as specified in 35 U.S.C. Section 112, Paragraph 6. In particular, the use of "step of" or "act of" in the Claims herein is not intended to invoke the provisions of 35 U.S.C. 112, Paragraph 6.

When an element is referred to herein as being "connected" or "coupled" to another element, it is to be understood that the elements can be directly connected to the other element, or have intervening elements present between the elements. In contrast, when an element is referred to as being "directly connected" or "directly coupled" to another element, it should be understood that no intervening elements are present in the "direct" connection between the elements. However, the existence of a direct connection does not exclude other connections, in which intervening elements may be present.

When an element is referred to herein as being "disposed" in some manner relative to another element (e.g., disposed on, disposed between, disposed under, disposed adjacent to, or disposed in some other relative manner), it is to be understood that the elements can be directly disposed relative to the other element (e.g., disposed directly on another element), or have intervening elements present between the elements. In contrast, when an element is referred to as being "disposed directly" relative to another element, it should be understood that no intervening elements are present in the "direct" example. However, the existence of a direct disposition does not exclude other examples in which intervening elements may be present.

Similarly, when an element is referred to herein as being "bonded" to another element, it is to be understood that the elements can be directly bonded to the other element (without any intervening elements) or have intervening elements present between the bonded elements. In contrast, when an element is referred to as being "directly bonded" to another element, it should be understood that no intervening elements are present in the "direct" bond between the elements. However, the existence of direct bonding does not exclude other forms of bonding, in which intervening elements may be present.

Likewise, when an element is referred to herein as being a "layer," it is to be understood that the layer can be a single layer or include multiple layers. For example, a conductive layer may comprise multiple different conductive materials or multiple layers of different conductive materials, and a dielectric layer may comprise multiple dielectric materials or multiple layers of dielectric materials. When a layer is described as being coupled or connected to another layer, it is to be understood that the coupled or connected layers may include intervening elements present between the coupled or connected layers. In contrast, when a layer is referred to as being "directly" connected or coupled to another layer, it should be understood that no intervening elements are present between the layers. However, the existence of directly coupled or connected layers does not exclude other connections in which intervening elements may be present.

Moreover, the terms left, right, front, back, top, bottom, forward, reverse, clockwise and counterclockwise are used for purposes of explanation only and are not limited to any fixed direction or orientation. Rather, they are used merely to indicate relative locations and/or directions between various parts of an object and/or components.

Furthermore, the methods and processes described herein may be described in a particular order for ease of description. However, it should be understood that, unless the context dictates otherwise, intervening processes may take place before and/or after any portion of the described process, and further various procedures may be reordered, added, and/or omitted in accordance with various embodiments.

Unless otherwise indicated, all numbers used herein to express quantities, dimensions, and so forth should be understood as being modified in all instances by the term "about." In this application, the use of the singular includes the plural unless specifically stated otherwise, and use of the terms "and" and "or" means "and/or" unless otherwise indicated. Moreover, the use of the terms "including" and "having," as well as other forms, such as "includes," "included," "has," "have," and "had," should be considered non-exclusive. Also, terms such as "element" or "component" encompass both elements and components comprising one unit and elements and components that comprise more than one unit, unless specifically stated otherwise.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C," or alternatively, "at least one of A, at least one of B, and at least one of C," it is expressly described as such.

One general aspect includes an apparatus comprising a first storage. The first storage comprises a first partition and a second partition, the first partition and the second partition being defined by an operating system, the first partition being accessible to a first user using the operating system, the second partition being inaccessible to the first user. The apparatus further comprises a communication interface and a processor coupled to the first storage and the communication interface. The processor is configured to process a first data, the first data comprising a second data and a third data; obtain the second data and the third data based on the first data; store the second data at the first partition; send the third data to a second storage via the communication interface; remove the third data from the apparatus; and generate the first data by using the second data and by obtaining the third data via the communication interface.

Implementations may include one or more of the following features. The apparatus further comprises a third partition, the second partition being inaccessible to the first user and accessible to a second user. The first partition is associated with one or more storage addresses according to an operating system. The apparatus further comprises a memory for storing the first data, the memory being coupled to the first storage and the processor, wherein the processor is configured to remove the third data from the memory. The processor is further configured to store the third data received from the communication interface. The third data is stored on a mobile device connected to the communication interface. The second partition is accessible to a second user via the communication interface. The communication interface comprises a wireless transceiver. The processor is configured to encrypt the second data using a first key, the third data being encrypted using a second key. The apparatus further comprises a user interface for receiving user authentication for accessing the first data. The first storage further comprises a third partition for storing a fourth data stored at a second storage received via the communication interface. The second storage is configured in a mobile device. The communication interface comprises a cellular interface. The second storage comprises a fourth partition and a fifth partition, the fourth partition being inaccessible to the first user, and the fifth partition being accessible to the first user via the communication interface. The processor is further configured to identify and communicate with a mobile device comprising the second storage for obtaining the third data.

According to another embodiment, the subject technology provides an apparatus that comprises a first storage comprising a first partition and a second partition, the first partition being accessible to a first user, the second partition being inaccessible to the first user. The apparatus comprises a communication interface and a processor coupled to the first storage and the communication interface. The processor is configured to process a request for accessing a first data, the first data comprising a second data and a third data. The processor is configured to identify the first partition of the first storage for storing the second data and third data being absent from the first storage. The processor is configured to transmit a first request to a first device for the third data via the communication interface. The processor is configured to receive the third data from the first device via the communication interface. The processor is configured to generate the first data using the second data and the third data. In some embodiments, the processor is further configured to transmit a second request to a second device for obtaining the third data via the communication interface. The processor is further configured to decrypt the third data.

According to yet another embodiment, the subject technology provides a method for storing data, which comprises: processing a first data to obtain a second data and a third data; storing the second data at a first storage of a first device; identifying a second device comprising a second storage; transmitting the third data to the second device for storing at the second storage via a first wireless communication link; receiving a request for the first data; identifying one or more devices for having the third data; obtaining the third data from an identified device; and providing the first data using the second data and the third data.

Implementations may include one or more of the following features. The method may further comprise: identifying a third device comprising a third storage; transmitting the third data to the third device for storing at the third storage via a second wireless communication link; and selecting between the second device and the third device for obtaining the third data. The method may further comprise encrypting the third data before transmitting to the second device and decrypting the third data after obtaining from the identified device.

As explained above, improved methods and systems for data storage of mobile devices are provided. In various embodiments, a mobile device divides the internal storage (e.g., solid state memory) in a phone and partitions a portion to be accessed by an authorized user. For example, internal storage refers to the built-in storage of a mobile phone, typically comprising NAND flash memory, and it is partitioned into several sections, each serving a specific purpose. For example, system partition holds the operating system (OS) and pre-installed apps. This partition may be configured as read-only for users to protect the integrity of the OS. Data partition refers to the storage location where user-installed apps and their data reside, and it is accessible to users but within the confines of app permissions. Internal storage may also include cache partition, which is used for storing temporary data for quick access, improving app and system performance. Internal storage may also include a storage partition, which is accessible to users for personal data like photos, videos, and documents. For example, an internal storage, or simply "storage" of a mobile device, may include multiple "portions" or regions for storing different types of data, and these portions may be configured as different partitions (e.g., with separate drive letter or drive name, or simply different disk locations). In various embodiments, a mobile device may have one or more allocated partitions for storing data received from external devices, and these allocated partitions may or may not be accessible to the user of the mobile device for security reasons.

In various implementations, a mobile device may rely on other devices for external storage. For example, other mobile devices (e.g., owned by members of immediate family) may act as cloud storage or even or Redundant Array of Independent Disks (RAID) storage, where local storage and storage of external devices (e.g., other connected mobile devices) are configured as a virtual logical unit. For example, an authorized user could be someone in the immediate family, like on a friends-and-family wireless account or within a business organization. The partitioning of the storage, as implemented in various embodiments, allows RAID like storage capabilities with the specific goal of protecting personal and sensitive data. Personal and sensitive data can include portions of account passwords or other encryption key information. For example, a mobile device may generate multiple data segments (e.g., referred to as first data, second data, third data, etc.), and these data segments are stored at different mobile devices. For example, if only a segment of password file is stored in a mobile device (other segments being stored in other mobile devices), it is unlikely for an unauthorized user to obtain the password if the mobile device is lost or stolen, as the mobile device does not have the complete password data. Password data are generally small, and it is to be understood that other types of content data (e.g., photos, video, word documents, notes, spreadsheets, etc.) may be stored at different external devices.

Allocation of partition may be determined by system (e.g., operating system of mobile device), or by user. In some implementations, user interface (UI) is provided to allow users to manage and control the allocation of storage spaces within their devices. For example, the UI offers a control and security, enabling users to designate specific portions of their device's storage for different purposes and users. In various embodiments, the UI allows users to interact with the device's storage system. Users can view the current storage configuration, including the division of internal storage into various partitions, and make adjustments as needed. Through the UI, users can assign specific portions of the device's storage for different uses. This could include allocating a segment of the storage for personal data like photos and videos, another for work-related documents, and yet another for data received from external devices. The UI would provide options to label these portions for easy recognition and management. In some embodiments, the UI allows users to control over who can access different portions of the storage. For instance, a user could set one partition to be accessible only to family members while restricting access to sensitive data to themselves alone. This level of control is useful in scenarios where devices are shared or used in a family or organizational context. In some implementations, the UI offers options to enhance security. Users can set passwords or enable encryption for specific storage portions, ensuring that sensitive data is protected. This feature may be useful when a portion of the storage is used to hold sensitive information like parts of passwords or encryption keys. In some embodiments, users can specify which data segments are stored locally and which are distributed to external devices, thereby enhancing data security and redundancy. The user interface may be integrated with the device's operating system, ensuring that managing storage settings feels like a natural extension of the device's functionality. This integration ensures that users do not require technical expertise to manage their device's storage effectively.

Depending on the application, communication interface may be implemented in various ways. For example, the physical layer could be cellular, Wi-Fi, Bluetooth, or other radio link supported by the mobile device. In some instances, a mobile device could attempt to use all available PHY level communication mechanisms depending on the spatial separation of the members of the distributed RAID system.

In certain implementations, the present invention uses mechanism for partitioning and accessing the portions of the allocated memory for the distributed storage system (e.g., virtual RAID system).

According to an embodiment, the present invention provides an apparatus that includes a first storage that includes a first portion, alongside a communication interface and a processor. This processor is connected to the first storage and the communication interface. Its configuration enables it to process a first data, which includes second data and third data. The processor is configured for obtaining the second and third data from the first data, storing the second data in the first portion of the first storage, and sending the third data to a secondary storage via the communication interface. Additionally, the processor removes the third data from the apparatus. The processor is further configured to obtain the first data by using the stored second data and retrieving the third data through the communication interface.

In some implementations, distributed data storage may be controlled by a central device, which monitors the status of each node in the network. For example, in a RAID 1 (R1) setup with two peer devices, if the central device detects that one node is going offline, it can initiate the transfer of data to another device from the peer that remains active. This process ensures that critical data is not lost or rendered inaccessible due to the shutdown of a single node. To enhance the robustness of the system, multiple RAID volumes can be established. This allows the system to manage data distribution more effectively and provides additional layers of redundancy. In some embodiments, a RAID 6 configuration may be used to provide redundancy for two devices; if two devices in the network go offline, the data, including critical password segments, remains secure and retrievable from the remaining active devices.

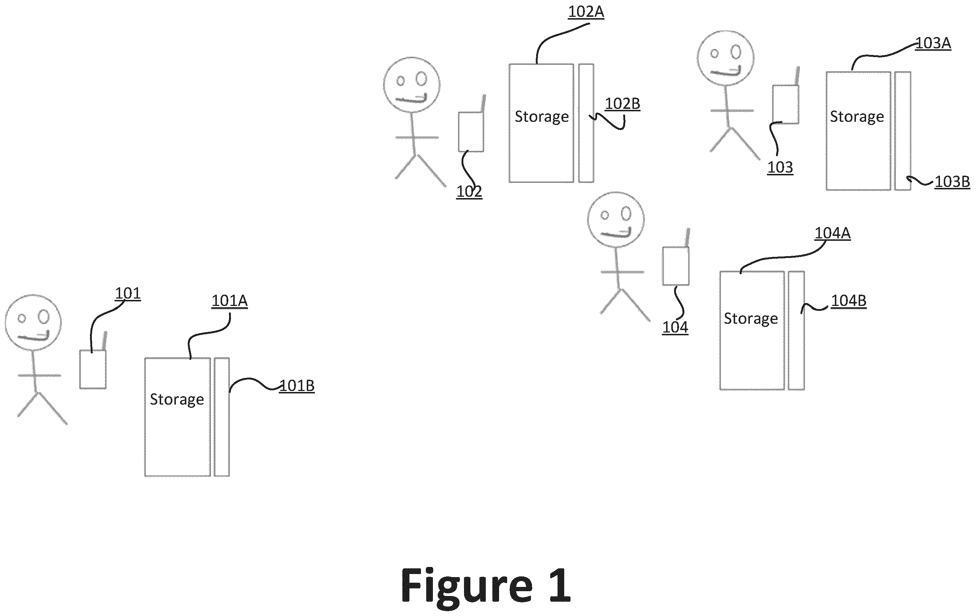

Figure 1 is a simplified diagram illustrating a system for distributing data for storing at multiple devices according to embodiments of the present invention. This diagram is merely an example, which should not unduly limit the scope of the claims. One of ordinary skill in the art would recognize many variations, alternatives, and modifications.

Device 101, depicted in Figure 1, encompasses storage divided into two distinct segments: portions 101A and 101B. This device could take various forms, including but not limited to a smartphone, tablet, laptop, smart TV, gaming console, or even an electric vehicle. Each of these forms possesses storage capabilities, essential for holding data either for prolonged durations or for frequent access. Typically, storage in such mobile devices is implemented via solid-state drives (SSDs) or hard disk drives (HDDs).

As an example, the term "storage" in this context signifies the component where data is preserved over long periods. In contrast, "memory" within device 101 refers to the medium for processing information and facilitating access to transient data. For instance, when a file is saved, it generally transitions from the memory, which is faster and volatile, to the more permanent but slower storage drive. For example, the term "portion" of a storage refers to be a region (e.g., a partition or others) of a storage.

In various embodiments, portions 101A and 101B are configured as individual partitions within device 101's storage. For example, the partition is configured for flexibility and utility: portion 101B might be allocated for collaborative use within a distributed storage framework, such as a redundant array of independent disks (RAID) system. This partition could support various RAID configurations (e.g., RAID 0, 1, 2, 5, 6, etc.), tailored to different storage requirements and data redundancy needs. Partitioning can be executed at the manufacturing stage or post-sale, using various partitioning tools upon the device's initial boot-up, should the user elect to enable this feature. Such partitioning facilitates the segregation of data, especially in multi-user environments. Portion 101B is configured to store data from additional devices (such as devices 102, 103, and 104), while portion 101A is dedicated solely to Device 101's use.

For example, at the partition level, access to portion 101B may be controlled through a partition management system, which is configured to recognize and authenticate different users or devices, granting or restricting access based on predefined rules. The partition management system could include software that integrates with the device 101 operating system, providing a user-friendly interface for managing access rights. This interface could allow administrators to set up and modify access permissions for different users, specifying which files or data types each user is authorized to access within portion 101B.

Depending on the implementation, device 101 may utilize advanced encryption techniques to secure the data within each partition. This means that even if unauthorized users were to access the partition physically, they would not be able to decrypt and read the data without the appropriate encryption key. Encryption keys would be managed securely, with stringent protocols for key distribution and revocation to prevent unauthorized access.

For example, at the disk control level, access to portion 101B may be regulated by implementing a disk management system that operates at a lower level than the partition management system. This could involve setting up firmware-level security features that control how the disk interacts with the rest of the device and external entities, preventing unauthorized access to data in portion 101B.

Partition sizes within device 101 can be dynamically adjustable or fixed, based on the implementation. In dynamic setups, a user interface on device 101 would enable configuration adjustments. Moreover, storage optimization techniques, such as defragmentation, could reclaim unused space, offering this reclaimed capacity-up to a predetermined maximum-for partition adjustments.

For example, access to these partitioned sections is controlled for security reasons. Only authorized users can access specific partitions. For instance, Device 101 users can access portion 101A but not 101B. Conversely, users of devices 102, 103, and 104 are barred from accessing portion 101A of Device 101. This security may be implemented at the storage and/or system levels, potentially incorporating physical layer authentication methods. For example, a user needing to retrieve a portion of a password from a personal cluster of devices (e.g., devices 102, 103, and 104) could be authenticated through their phone number by the managing system or software.

Depending on the implementation, other security measures may be implemented. For example, encryption key management could be employed, requiring a unique decryption key for each authorized user or device for access to the data in portion 101B. Behavioral analytics may be used in monitoring and analyzing user behavior patterns, such as typical access times and frequencies, to detect and mitigate anomalous and potentially unauthorized access attempts. In some applications, securing data transfers with secure socket layer (SSL)/transport layer security (TLS) encryption protocols is used to provide a secure channel for data exchange, even over unsecured networks.

For example, device 101 may form connections with devices 102, 103, and 104 through various communication protocols. These connections can be facilitated via wireless networks, including but not limited to Wi-Fi, cellular networks, Bluetooth, and satellite links. Additionally, wired connections such as Ethernet or USB may also be employed, depending on specific implementation requirements. For data storage and management, portion 101B of device 101 may be configured to store data originating from devices 102, 103, and 104. This configuration is reciprocated in devices 102, 103, and 104, where portions 102B, 103B, and 104B, respectively, are allocated for storing data from the other devices in the network. For example, the arrangement forms a distributed storage system, wherein, for example, device 101 utilizes portions 102B, 103B, and 104B for its storage needs (e.g., akin to a RAID setup, functioning at the operating system level).

Data transfer between these devices may utilize encryption, which ensures the security and integrity of the data as it moves across the network, preventing unauthorized access or interception. The encryption process is a crucial aspect of the data exchange protocol within this distributed storage configuration, providing a secure and reliable means of data communication between devices 101, 102, 103, and 104.

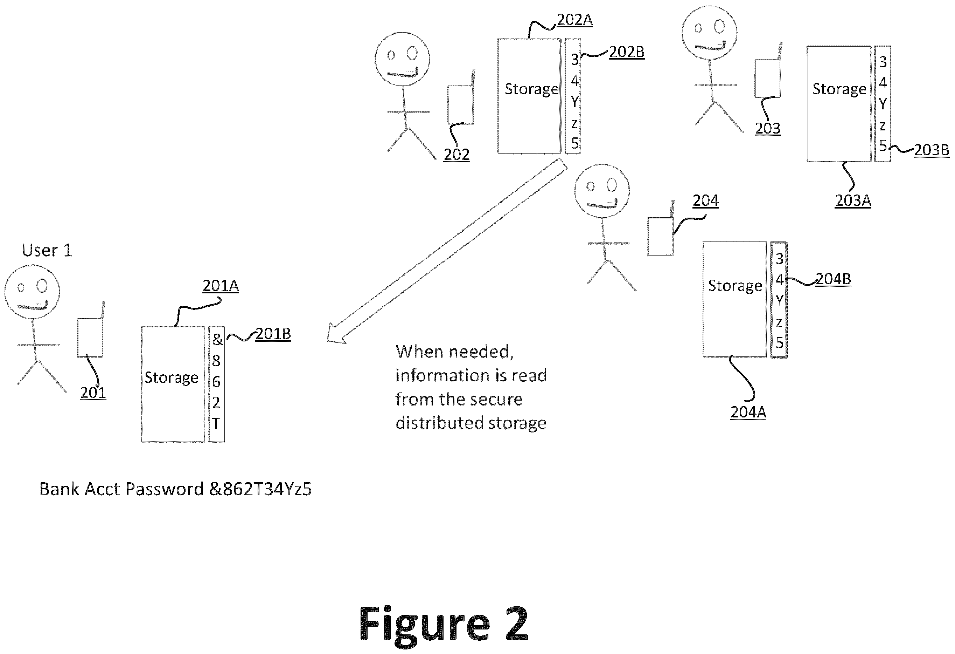

Figure 2 is a simplified diagram illustrating an exemplary process for storing password data at multiple devices according to embodiments of the present invention. This diagram is merely an example, which should not unduly limit the scope of the claims. One of ordinary skill in the art would recognize many variations, alternatives, and modifications.

As shown, user 1 has device 201, which is divided into two storage portions: 201A and 201B. For example, portion 201A stores data unique to device 201 like user settings and application data. Portion 201B is part of a larger storage network, similar to RAID system, that connects wirelessly with other devices. For example, a distributed RAID system, according to embodiments of the present invention, could be set up in various configurations, depending on the required level of redundancy and performance. For example, a RAID 1 setup could mirror data across devices, ensuring that a copy of the data in portion 201B of Device 201 is also stored in portions 202B, 203B, and 204B of the other devices. As another example, a RAID 5 configuration might be employed for both redundancy and increased storage efficiency, where data and parity information are distributed across all participating devices. In various embodiments, devices 201-024 connect through a wireless network, such as Wi-Fi, cellular, Bluetooth, or others (as explained above). For example, wireless connectivity allows the devices to communicate and synchronize data without physical cabling, enabling flexible placement and mobility of the devices within the network range.

In various implementations, communication between devices 201-204 is configured to be versatile and adaptable, functioning over various physical (PHY) and media access control (MAC) layers. An embodiment of this communication system utilizes cellular networks, leveraging their widespread availability and robust infrastructure to facilitate seamless connectivity among the devices. Wi-Fi networks may also be used. While Wi-Fi offers high-speed connectivity, it introduces limitations regarding the spatial separation of nodes; devices need to be within the Wi-Fi network's range to communicate effectively. To address diverse scenarios, mixed mode or hybrid communication embodiments that combine cellular and Wi-Fi networks might be explored. These hybrid solutions may help balance the coverage of cellular networks with the high-speed data transfer capabilities of Wi-Fi, albeit with similar spatial limitations.

Devices 202, 203, and 204 also have two storage portions each: 202A and 202B, 203A and 203B, and 204A and 204B, respectively. For example, in these devices, the 'A' sections hold data specific to each device, while the 'B' sections are integrated into the shared storage network, thereby allowing each device to keep its own data and also contribute to a shared storage space.

In the system 200, data from one device can be stored across other devices. For example, sensitive data from device 201 could be stored in portions 202B, 203B, and 204B, which helps protect against data loss and allows for easier data access and sharing among the devices.

Various types of data, for security or storage reasons, may be split up and distributed to other devices for storage. As an example, the password "&862T34Uz5" is split into two pieces, a first data piece "&862T" and a second data piece "34Uz5". For example, device 201 stores the first data piece at portion 201B, while the second data piece is stored at other devices. For example, portions 202B, 203B, and 204B of respective devices each may store the second data piece. Encryption of data during transmission and at rest, along with secure authentication mechanisms for accessing storage portions B of devices 201-204, protect data integrity and privacy. For example, as data are segmented into multiple pieces (e.g., the password splitting into the first data piece and the second data piece), with each segment stored on a different device.

For managing storage capacity, data can be sequentially split and stored across devices. For example, the first half of a large dataset is stored in portions 201B and 202B, while the second half is stored in 203B and 204B. This method helps in balancing the storage load and utilizing the available space efficiently.

Segmentation may enhance security by distributing the data and reducing the risk of complete data loss due to a single device failure. For instance, a file could be divided into several segments, with each segment stored in different portions of the "B" sections of devices 201-204. Splitting sensitive data, like passwords or other data, across multiple devices adds a layer of security. As in the provided example, a password is divided into two parts, with one part stored on one device and the other part on different devices. This fragmentation ensures that compromising a single device does not lead to a full data breach.

In certain implementation, data are stored at different devices for redundancy. For example, redundancy can be implemented by storing duplicates of the same data segment across devices 201-204. This way, even if one device fails or a data segment becomes corrupted, the system can retrieve the data from another device. This approach is particularly useful for maintaining the integrity and availability of essential data. For example, devices 201-204 may each store a piece of the password "&862T34Uz5" through a predetermined scheme: portion 201B storing "&862T", portion 202B storing "62T34", portion 203B storing "T34Uz5", and portion 204B storing ""&86" and "34Uz5". For example, the password may be regenerated by obtaining data from two of the devices, but none of the devices has all the password.

In various embodiments, a system could dynamically allocate storage based on the current load and capacity of each device. For example, if device 202 has more free space, it could be allocated a larger portion of the data, whereas if device 203 is near capacity, it might receive a smaller portion or none at all. This dynamic allocation helps in optimizing the overall storage capacity across the network.

For example, data can be encrypted and then sharded, or divided, into smaller, non-functional pieces. Each shard is stored on a different device. Even if an unauthorized entity accesses a shard, without the other pieces and the encryption key, the data remains secure and incomprehensible.

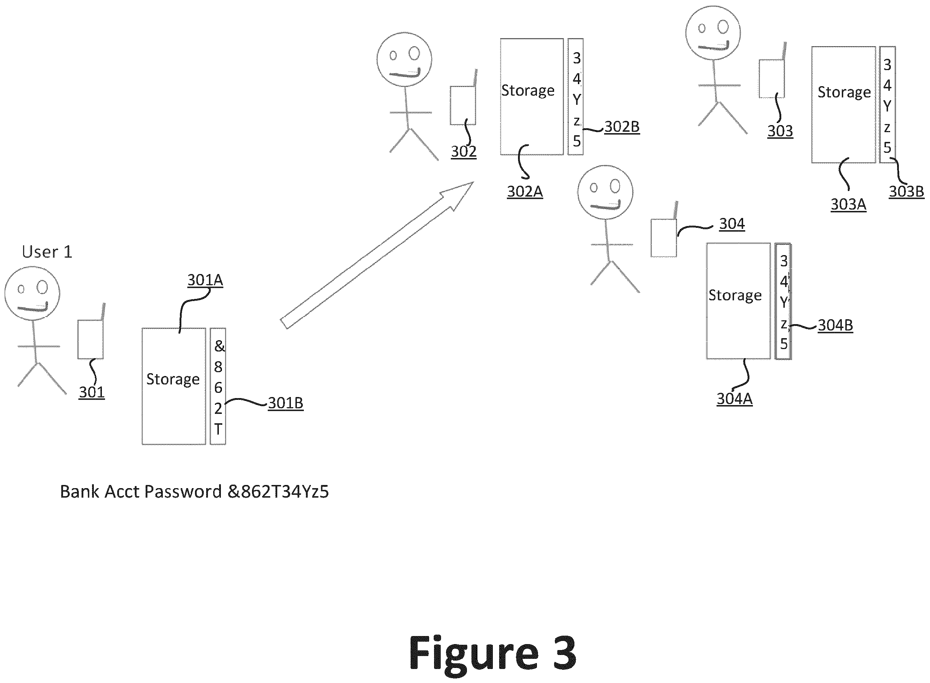

Figure 3 is a simplified diagram illustrating an exemplary implementation for accessing external devices as storage according to embodiments of the present invention. This diagram is merely an example, which should not unduly limit the scope of the claims. One of ordinary skill in the art would recognize many variations, alternatives, and modifications. As an example, data distribution and storage may be provided by using various network protocols, such as Internet control message protocol (ICMP). For example, device 301, which includes storage portions 301A and 301B, accesses data stores at devices 302, 303, and 304 using ICMP protocol. In various implementations, portions 301A, 302A, 303A, and 304A of device storage are configured for device users, while portions 301B, 302B, 303B, and 304B are configured as distributed storages that are accessible via communication network, e.g., using ICMP. Below is an example of using ICMP protocol for storage distribution and sharing among devices 301-304:
icmp permit host 172.16.2.15 echo outside
icmp permit 172.22.1.0 255.255.0.0 echo outside
icmp permit any unreachable outside # memory fetch

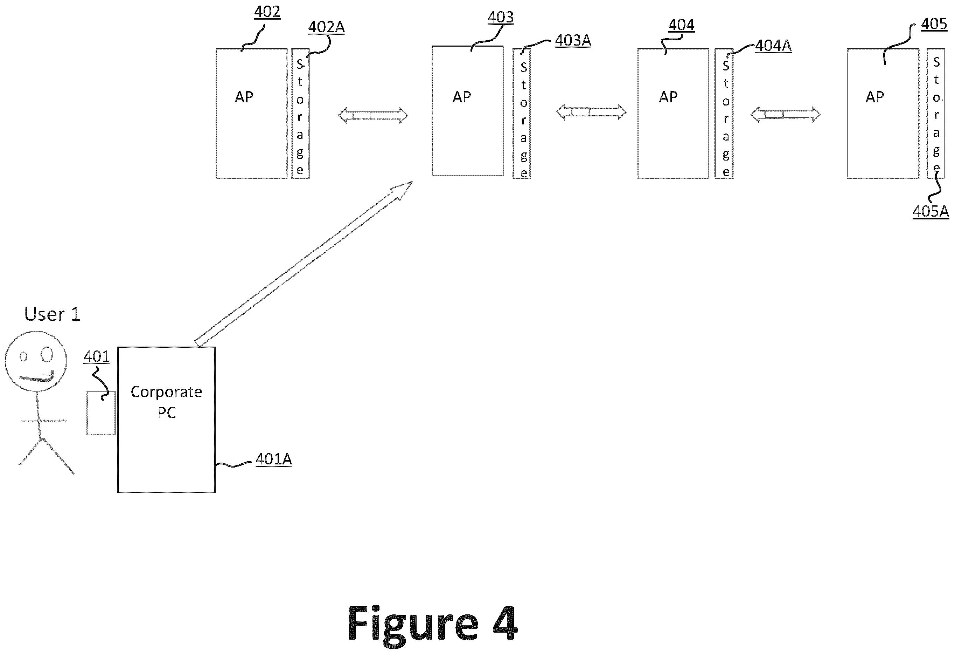

Figure 4 is a simplified diagram illustrating a system for storing data at multiple devices according to embodiments of the present invention. This diagram is merely an example, which should not unduly limit the scope of the claims. One of ordinary skill in the art would recognize many variations, alternatives, and modifications. For example, devices 402, 403, 404, and 405, each provides storage for device 401. For example, devices 402, 403, 404, and 405 may be referred to as access point devices (AP), which may include server, router, and others. These devices, 402 through 405, may be referred to as access point devices (APs). The APs encompass a variety of equipment such as servers, routers, and other similar hardware, each equipped with its own additional storage capacity.

A feature of each AP is the ability to communicate with other APs within the system, facilitating a seamless exchange and synchronization of data. This inter-AP communication forms the backbone of a distributed cloud storage network, internal to the organization. For example, the distributed storage network is akin to commercial cloud storage solutions, but is tailored for internal organizational use. In various implementations, distributed storage system eliminates the need for expensive storage solutions. For example, by leveraging the existing Wi-Fi network infrastructure and enhancing it with the simple addition of USB drives connected to each AP, organizations can expand their storage capabilities. This method turns Wi-Fi network into an additional storage resource, offering a cost-effective and scalable solution.

In various embodiments, internally managed cloud storage system may provide a layer of security. By keeping the cloud storage (i.e., APs) internal and not dependent on external cloud services, it ensures that hypersensitive information is securely stored and managed within the organization's control, rather than on individual PCs or external servers. This approach enhances data security, and ensures compliance with various data privacy and protection regulations.

Depending on the implementation, storage distribution among APs 402, 403, 404, and 405 can be executed through several methods, including redundant storage and partial storage, which allows for security and availability of data within the network. In some implementations, redundant storage may be provided. In this method, data is replicated across multiple APs to ensure redundancy. For instance, a file stored in AP 402 would have identical copies in APs 403, 404, and 405. This redundancy guards against data loss, as the failure of a single AP would not lead to the loss of the data; it can be retrieved from another AP where it is redundantly stored. This approach is useful for safeguarding essential or frequently accessed data.

A partial storage scheme may be used as well. Partial storage involves splitting a data file into segments and distributing these segments across different APs. For example, a large file could be divided into four segments, with each segment stored in one of the APs 402-405. This method enhances data security as no single AP holds the entire file, reducing the risk of complete data compromise in the event of a security breach at a single point.

As an example, when a user device, like device 401, requires access to stored data, it initiates a request to the network. A system, which may be implemented in various ways, locates where the data is stored - whether it is in a single AP or distributed across multiple APs. For redundant storage, if the data is redundantly stored, the system retrieves it from the nearest or least busy AP to ensure quick and efficient access. This process is typically managed by an internal network protocol that determines the optimal source for data retrieval based on network conditions and AP load. In cases where the data is partially stored, the system aggregates the different segments from the respective APs. Once all segments are retrieved, they are reassembled into the original file format for use by the user device. This process is transparent to the user, who receives the complete file as if it were retrieved from a single location.

In various implementations, a system continuously monitors network conditions to optimize data retrieval. It may choose to retrieve data from an AP with better connectivity or lower usage at the time of the request, ensuring efficient use of the network resources. During data transfer between the APs and the user device, security protocols such as encryption may be employed to protect the data. The system ensures that the data remains secure during transit and that only authorized devices and users can access it.

For the end-user, accessing this data can be made simple through a user-friendly interface that seamlessly integrates with the device's operating system. This interface would allow users to access, modify, and manage stored data with ease, just as they would with local storage.

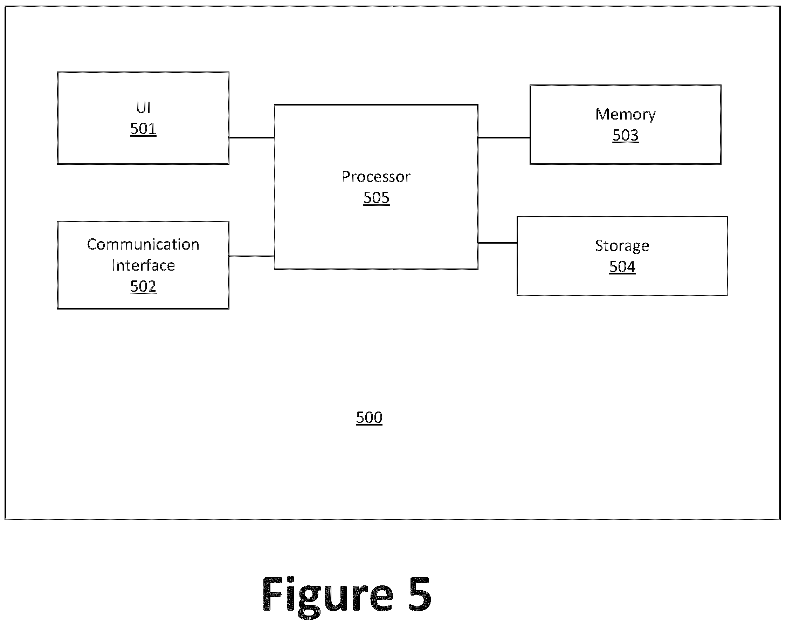

Figure 5 is a simplified diagram illustrating an exemplary device according to embodiments of the present invention. This diagram is merely an example, which should not unduly limit the scope of the claims. One of ordinary skill in the art would recognize many variations, alternatives, and modifications. User device 500, as shown in Figure 5, includes user interface 501, communication interface 502, memory 503, storage 504, and processor 505.

For example, user Interface 501 is configured to receive and process user requests, particularly for accessing files. It is an interactive gateway through which users can communicate with the device, request data, and manage their files. The design of this interface can vary, ranging from a simple command line to a sophisticated graphical user interface (GUI), depending on the device's application and user requirements. The device may include a user interface specifically for managing the storage. For example, UI 501 may be configured to allow users to view and modify the storage settings, check the status of the distributed storage partition, and manage security settings. This user-friendly interface ensures that users can easily interact with storage 504. Communication interface 502 is configured for the transmission and reception of data to and from other devices. It facilitates the distributed storage mechanism by sending data to other devices for storage and retrieving data from these devices when needed for user access. The communication interface can support various communication protocols, including but not limited to Wi-Fi, Bluetooth, cellular networks, and Ethernet, ensuring compatibility and connectivity with a wide range of devices in the network. Memory 503 provides temporary storage, and may be configured for processing and accessing data quickly.

Storage 504 is configured for storing user data. It may also include a dedicated portion or partition that is part of a distributed data storage mechanism, allowing device 500 to store data from other devices within the network. This storage can be implemented using various technologies like solid-state drives (SSDs) or hard disk drives (HDDs), depending on the device's design and storage requirements.

In some implementations, storage 504 can be divided into multiple partitions, one of which is specifically allocated for distributed storage. This partition is integral to a networked storage system, where it collaborates with similar partitions in other devices to form a cohesive and distributed data repository. Such a configuration allows device 500 to store part of its data on other devices in the network, while also holding data from these devices. This distributed approach enhances data redundancy and availability, providing a robust solution for data backup and recovery.

To protect the data stored at storage 504, various security features are implemented. These may include strong encryption algorithms to protect data at rest, ensuring that stored data is inaccessible to unauthorized users. For example, encryption keys are managed securely, with protocols in place for key generation, distribution, and revocation. Storage 504 may be equipped with sophisticated access control mechanisms, which ensure that only authorized users or devices can access the data stored in the device. Access control can be based on user credentials, such as passwords or biometric data, and can also be role-based, providing different levels of access depending on the user's role or permissions within a network. To maintain the integrity of the data, Storage 504 may include features for regular data integrity checks, which ensure that the data has not been altered or corrupted, maintaining its reliability and trustworthiness. For example, when data is transmitted to or from the distributed storage partition, network security protocols are employed. These protocols ensure the secure transfer of data across the network, protecting it from interception or unauthorized access during transmission.

In various implementations, processor 505 provides various functions, including data processing, distribution, and encryption. For example, It executes the device's operating system and applications, manages data flow within the device, and ensures the secure encryption of data as it is stored or transmitted. Among other features, processor 505 may be configured to process data, which may involve computational functions such as data splitting, format transformation, or applying algorithms to separate the first data into two distinct parts. Processor 505 may also provide data management functions, such as calculating and managing storage allocation. While processor 505 itself does not handle communication, it may be configured to initiate the process of identifying and transmitting data to other devices. For example, processor 505 may execute algorithms to identify suitable storage locations in external devices and then instructs the communication interface to transmit the third data. Processor 505 may be configured to determine the optimal device (second or third device) for data storage and retrieval based on storage availability, network conditions, and other parameters. For the security of the third data, processor 505 may run encryption algorithms before transmission and decryption processes after retrieval. This involves cryptographic computations to ensure the data's security during transit and storage. Upon a request for accessing data that is distributed among multiple devices, processor 505 manages the computational process of combining data that is stored locally and the data that is retrieved from another device. For example, when a request for a data is received, processor 505 determines one or more ways to retrieve the third data. This may involve computing which device currently holding the third data is most accessible or has the optimum data integrity.

While the above is a full description of the specific embodiments, various modifications, alternative constructions and equivalents may be used. Therefore, the above description and illustrations should not be taken as limiting the scope of the present invention which is defined by the appended claims.

## Claims

1. An apparatus comprising:
a first storage comprising a first partition and a second partition, the first partition and the second partition being defined by an operating system, the first partition being accessible to a first user using the operating system, the second partition being inaccessible to the first user;
a communication interface; and
a processor coupled to the first storage and the communication interface, wherein the processor is configured to:
process a first data, the first data comprising a second data and a third data;
obtain the second data and the third data based on the first data;
store the second data at the first partition;
send the third data to a second storage via the communication interface;
remove the third data from the apparatus; and
generate the first data by using the second data and by obtaining the third data via the communication interface.

2. The apparatus of claim 1, further comprising a third partition, the second partition being inaccessible to the first user and accessible to a second user and/or
wherein the first partition is associated with one or more storage addresses according to an operating system.

3. The apparatus of one of the preceding claims, further comprising a memory for storing the first data, the memory being coupled to the first storage and the processor, wherein the processor is configured to remove the third data from the memory,
in particular,
wherein the processor is further configured to store the third data received from the communication interface.

4. The apparatus of one of the preceding claims, wherein the third data is stored on a mobile device connected to the communication interface and/or
wherein the second partition is accessible to a second user via the communication interface.

5. The apparatus of one of the preceding claims, wherein the communication interface comprises a wireless transceiver and/or
wherein the processor is configured to encrypt the second data using a first key, the third data being encrypted using a second key.

6. The apparatus of one of the preceding claims, further comprising a user interface for receiving user authentication for accessing the first data.

7. The apparatus of one of the preceding claims, wherein the first storage further comprising a third partition for storing a fourth data stored at a second storage received via the communication interface,
in particular,
wherein:
the second storage is configured in a mobile device; and
the communication interface comprising a cellular interface.

8. The apparatus of claim 7, wherein the second storage comprises a fourth partition and a fifth partition, the fourth partition being inaccessible to the first user, and the fifth partition being accessible to the first user via the communication interface.

9. The apparatus of one of claims 7 or 8, wherein the processor is further configured to identify and communicate with a mobile device comprising the second storage for obtaining the third data.

10. An apparatus comprising:
a first storage comprising a first partition and a second partition, the first partition being accessible to a first user, the second partition being inaccessible to the first user;
a communication interface; and
a processor coupled to the first storage and the communication interface, wherein the processor is configured to:
process a request for accessing a first data, the first data comprising a second data and a third data;
identify the first partition of the first storage for storing the second data and third data being absent from the first storage;
transmit a first request to a first device for the third data via the communication interface;
receive the third data from the first device via the communication interface; and
generate the first data using the second data and the third data.

11. The apparatus of claim 10, wherein the processor is further configured to transmit a second request to a second device for obtaining the third data via the communication interface.

12. The apparatus of one of claims 10 or 11, wherein the processor is further configured to decrypt the third data.

13. A method for storing data, the method comprising:
processing a first data to obtain a second data and a third data;
storing the second data at a first storage of a first device;
identifying a second device comprising a second storage;
transmitting the third data to the second device for storing at the second storage via a first wireless communication link;
receiving a request for the first data;
identifying one or more devices for having the third data;
obtaining the third data from an identified device; and
providing the first data using the second data and the third data.

14. The method of claim 13, further comprising:
identifying a third device comprising a third storage;
transmitting the third data to the third device for storing at the third storage via a second wireless communication link; and
selecting between the second device and the third device for obtaining the third data.

15. The method of one of claims 13 or 14, further comprising:
encrypting the third data before transmitting to the second device; and
decrypting the third data after obtaining from the identified device.
